# EUROPEAN PATENT APPLICATION

(11) **EP 4 556 356 A1**
(43) Date of publication of application: **21.05.2025**
(21) Application number: 24213154.8
(22) Date of filing: 15.11.2024
(51) Int. Cl.: B62K 21/26

(54) **HANDLEBAR TAPE ASSEMBLY**

(30) Priority: 15.11.2023 TW 112144123
(71) Applicant: Giant Manufacturing Co., Ltd., Xitun Dist Taichung City 407 (TW)
(72) Inventor: HU, Chia-Yu, 407 TAICHUNG CITY (TW)
(74) Representative: Lang, Christian

(57) **Abstract**

A handlebar tape assembly is applied to be disposed at a bicycle. The bicycle includes a handlebar. A terminal end of the handlebar has an opening, and the handlebar tape assembly includes a cover and a tape. The cover includes a top portion, an extending portion and at least one cutting slot. The extending portion and the top portion form an installing space. The extending portion is provided with the cutting slot, and the cutting slot extends from a distal end of the extending portion toward the top portion. An end of the tape penetrates through the extending portion from the opening and is sandwiched between the extending portion and the terminal end. The tape is wound around an outer side of the extending portion and the handlebar about an axis of the cover.

## Description

### BACKGROUND

### Field of Invention

The present invention relates to a handlebar tape assembly. More particularly, the present invention relates to a handlebar tape assembly that is wound by a tape and a bicycle.

### Description of Related Art

Due to the rise of environmental awareness, people's requirements for bicycles increase gradually, and people are pursuing bicycles with higher quality. Taking road bicycles as an example, in order to protect a hollow tubular handlebar, those in the field developed a plug to prevent a terminal end of a handlebar from being damaged. The conventional plug is inserted into the terminal end of the handlebar in an interference manner. However, the plug is easily fell due to an external force. In order to tightly combine the plug with the handlebar, an outer diameter of the plug is set to be approximately equal to an inner diameter of the handlebar. A user needs to expend considerable effort to install the plug to the handlebar, causing difficulties in installation and disassembly. Furthermore, the handlebar may have different inner diameters due to manufacturing tolerances. Consequently, the plug might not fit the inner diameter of the handlebar. Therefore, the plug must undergo further processing so as to be installed at the handlebar, causing the difficulties of installation.

To solve the above problems, those in the field developed a sleeved-type plug sleeving on the handlebar. However, the sleeved-type plug needs to be installed at the handlebar with an extra adhesive first and then the tape is wound therearound, leading to difficulties in disassembling and residual glue.

In view of this, a handlebar tape assembly and a bicycle that can enhance the usage stability and installation convenience are still the goals that those in the field pursue.

### SUMMARY

According to one aspect of the present disclosure, a handlebar tape assembly, applied to be disposed at a bicycle, is provided. The bicycle includes a handlebar, and a terminal end of the handlebar includes an opening. The handlebar tape assembly includes a cover and a tape. The cover is detachably sleeved on the terminal end and includes a top portion, an extending portion and at least one cutting slot. The top portion covers the opening. The extending portion surrounds the top portion and extends from the top portion along an axis of the cover. The extending portion and the top portion form an installing space. The installing space is configured for accommodating the terminal end. The cutting slot is disposed at the extending portion and extends from a distal end of the extending portion toward the top portion. An end of the tape penetrates through the extending portion from the cutting slot and is sandwiched between the extending portion and the terminal end. The tape is wound around an outer side of the extending portion and the handlebar about the axis.

According to the handlebar tape assembly of the aforementioned aspect, the extending portion may include a radially protruded structure near the at least one cutting slot. The end of the tape penetrates therethrough from the at least one cutting slot and is sandwiched between the radially protruded structure and the handlebar.

According to the handlebar tape assembly of the aforementioned aspect, the radially protruded structure may include a chamfer portion, and a thickness of the chamfer portion is reduced toward the at least one cutting slot.

According to the handlebar tape assembly of the aforementioned aspect, an inner surface of the extending portion may include a first curved surface and a second curved surface. The first curved surface and the second curved surface are connected to each other along a circumferential direction. The second curved surface is near the radially protruded structure. A center of circle of the first curved surface and a center of circle of the second curved surface are different.

According to the handlebar tape assembly of the aforementioned aspect, the first curved surface and the second curved surface may include a first inner radius and a second inner radius respectively. The first inner radius is smaller than the second inner radius.

According to the handlebar tape assembly of the aforementioned aspect, a maximum gap distance may be contained between an outer edge of the top portion and an outer edge of the extending portion. The maximum gap distance is larger than or equal to 0.5 mm and smaller than or equal to 2 mm.

According to the handlebar tape assembly of the aforementioned aspect, a number of the at least one cutting slot may be one.

According to the handlebar tape assembly of the aforementioned aspect, a width of the at least one cutting slot may be larger than or equal to 1 mm and smaller than or equal to 6 mm.

According to the handlebar tape assembly of the aforementioned aspect, the top portion may include a bevel structure, and a radial width of the bevel structure is reduced from the extending portion.

### BRIEF DESCRIPTION OF THE DRAWINGS

The invention can be more fully understood by reading the following detailed description of the embodiment, with reference made to the accompanying drawings as follows:
Fig. 1 is a three-dimensional schematic view of a handlebar tape assembly installed at a handlebar according to an embodiment of the present disclosure.
Fig. 2 is a partially exploded view of the handlebar tape assembly and the handlebar according to the embodiment of Fig. 1.
Fig. 3 is a three-dimensional schematic view of a cover according to the embodiment of Fig. 2.
Fig. 4A is a side view of the cover according to the embodiment of Fig. 3.
Fig. 4B is a top view of the cover according to the embodiment of Fig. 3.
Fig. 5 is a cross-section view of a tape winding an extending portion from a cutting slot according to the embodiment of Fig. 1.
Fig. 6 is a partial three-dimensional schematic view of a bicycle according to another embodiment of the present disclosure.
Fig. 7A is a top view of a cover according to the embodiment of Fig. 6.
Fig. 7B is a top view of another cover according to the embodiment of Fig. 6.

### DETAILED DESCRIPTION

The embodiments of the present disclosure will be illustrated with drawings hereinafter. In order to clearly describe the content, many practical details will be mentioned with the description hereinafter. However, it will be understood by the reader that the practical details will not limit the present disclosure. In other words, in some embodiment of the present disclosure, the practical details are not necessary. Additionally, in order to simplify the drawings, some conventional structures and elements will be illustrated in the drawings in a simple way; the repeated elements may be labeled by the same or similar reference numerals.

In addition, the terms first, second, third, etc. are used herein to describe various elements or components, these elements or components should not be limited by these terms. Consequently, a first element or component discussed below could be termed a second element or component. Moreover, the combinations of the elements, the components, the mechanisms and the modules are not well-known, ordinary or conventional combinations, and whether the combinations can be easily completed by the one skilled in the art cannot be judged based on whether the elements, the components, the mechanisms or the module themselves are well-known, ordinary or conventional.

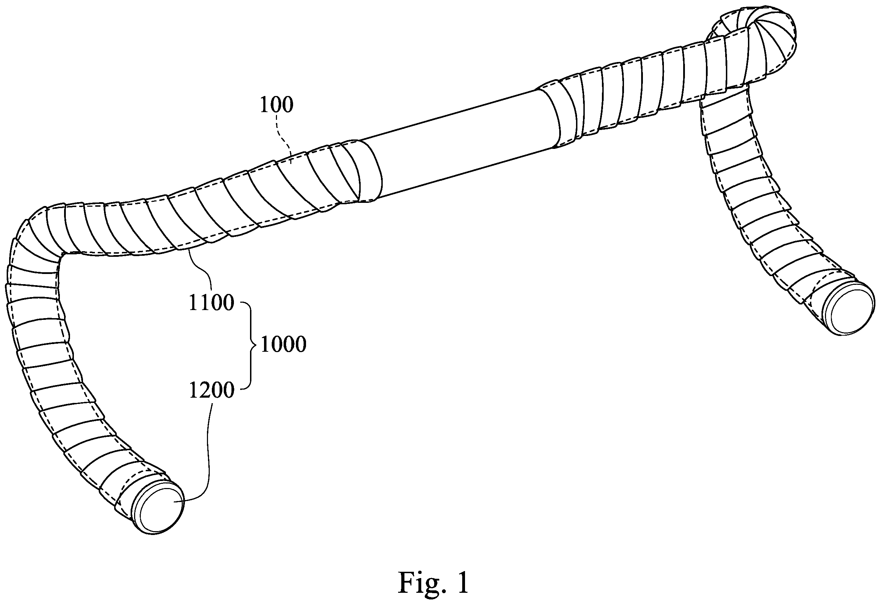

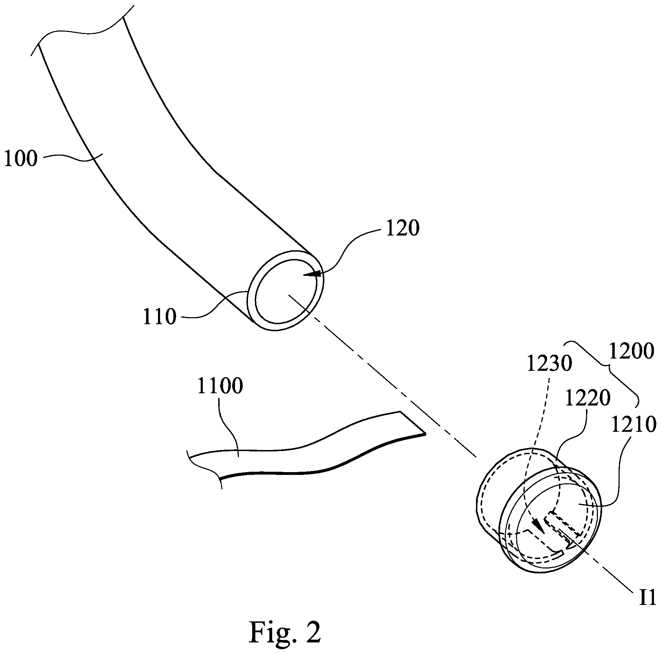

Please refer to Fig. 1 and Fig. 2. Fig. 1 is a three-dimensional schematic view of a handlebar tape assembly 1000 installed at a handlebar 100 according to an embodiment of the present disclosure. Fig. 2 is a partially exploded view of the handlebar tape assembly 1000 and the handlebar 100 according to the embodiment of Fig. 1. As shown in Fig. 1 and Fig. 2, the handlebar tape assembly 1000 is applied to be disposed at a bicycle. The bicycle includes a handlebar 100, and a terminal end 110 of the handlebar 100 includes an opening 120. The handlebar tape assembly 1000 includes a cover 1200 and a tape 1100. The cover 1200 is detachably sleeved on the terminal end 110 and includes a top portion 1210, an extending portion 1220 and at least one cutting slot 1230. The top portion 1210 covers the opening 120. The extending portion 1220 surrounds the top portion 1210 and extends from the top portion 1210 along an axis I1 of the cover 1200. The extending portion 1220 and the top portion 1210 form an installing space (not labelled). The installing space is configured for accommodating the terminal end 110. The cutting slot 1230 is disposed at the extending portion 1220 and extends from a distal end of the extending portion 1220 towards the top portion 1210. It is noted that in the embodiment of Fig. 1, an extending direction of the extending portion 1220 is parallel to the axis 11. An end of the tape 1100 penetrates through the extending portion 1220 from the cutting slot 1230 and is sandwiched between the extending portion 1220 and the terminal end 110. The tape 1100 is wound around an outer side of the extending portion 1220 and the handlebar 100 about the axis I1.

In the assembling process, the user can put the tape 1100 into the installing space from the cutting slot 1230. The cover 1200 is then sleeved on the terminal end 110 of the handlebar 100, and the tape 1100 is sandwiched between the extending portion 1220 and the terminal end 110. The user winds the tape 1100 around the outer side of the extending portion 1220 about the axis I1 and then winds the tape 1100 around the handlebar 100. Therefore, the tape 1100 can secure the cover 1200 to the terminal end 110. Hence, the problem that the cover is easily fell due to an external force owing to that the cover in the conventional manner is inserted to the opening of the handlebar and is connected to the handlebar in an interference manner can be prevented. Therefore, the usage convenience can be enhanced. Additionally, when the user replaces the tape 1100, the cover 1200 can be easily disassembled from the handlebar 100 and reinstalled to the handlebar 100 again, which can avoid the problem that cover has difficulties in assembling and disassembling due to the connection in the interference manner. Furthermore, the cover 1200 is sleeved on and installed at the terminal end 110. A problem that the user must reduce the outer diameter of the cover in the conventional manner owing to the different inner diameters of the openings caused by the manufacturing tolerance of the handlebar can be prevented. Therefore, the handlebar tape assembly 1000 in the present disclosure can further enhance the usage stability and the installation convenience. The structural details of the handlebar tape assembly 1000 will be described below.

As shown in Fig. 1 and Fig. 2, a number of the handlebar tape assemblies 1000 can be two. The handlebars 100 are located at both sides of the one-piece handle, and a middle section of the handle is connected to a stem of the frame. The connection structure is conventional in this field, and the details will not be described. The handlebar 100 includes a plurality of curved sections forming curved bar portions that are configured for the user to hold thereon. To be specific, the bicycle disposing the handlebar 100 is a road bicycle, and the one-piece handle has a hollow tubular structure, but the present disclosure is not limited thereto.

The tape 1100 can be made of a plastic material, and a surface of the tape 1100 has a textured pattern. Through the flexibility of the plastic material and the textured surface, a friction force of the surface of the tape 1100 can be further increased, thereby increasing the strength of the tape 1100 winding the extending portion 1220 and handlebar 100 so as to increase the securing stability. In other embodiments, the tape can be made of a cork material or a leather material, and an adhesive can be disposed at the surface of the tape so as to increase the strength of the extending portion and the handlebar as securing by the tape, but the present disclosure is not limited thereto.

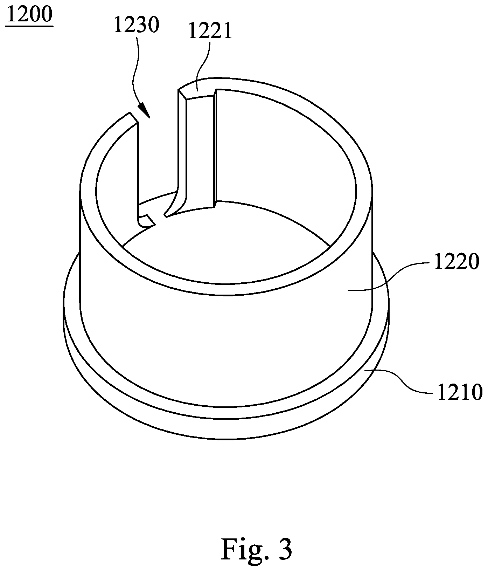

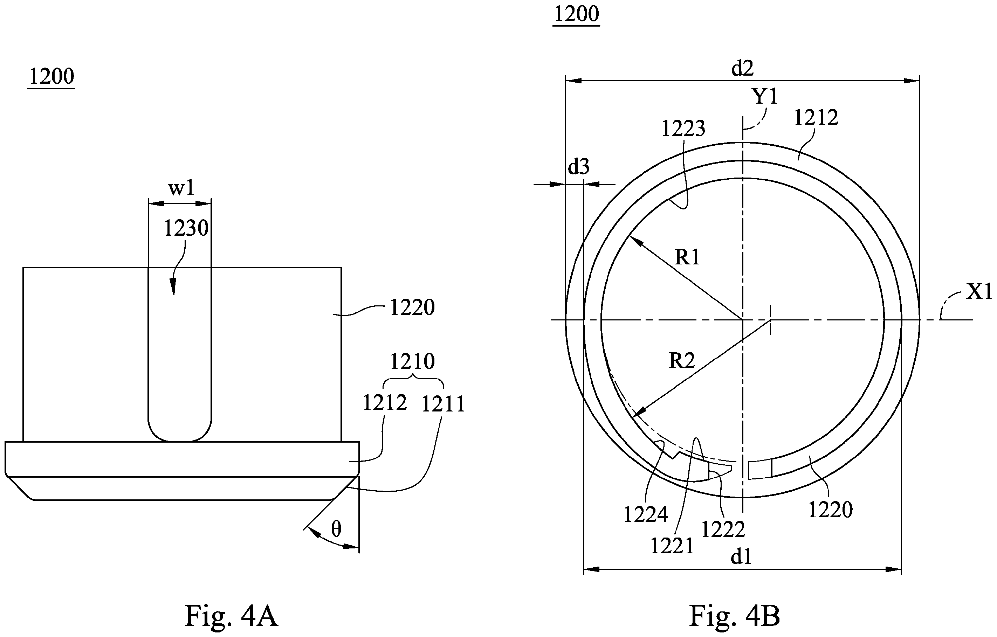

Please refer to Fig. 3, Fig. 4A and Fig. 4B. Fig. 3 is a three-dimensional schematic view of the cover 1200 according to the embodiment of Fig. 2. Fig. 4A is a side view of the cover 1200 according to the embodiment of Fig. 3. Fig. 4B is a top view of the cover 1200 according to the embodiment of Fig. 3. As shown in Fig. 2 to Fig. 4B, a number of the cutting slot 1230 can be one, and a width w1 of the cutting slot 1230 can be larger than or equal to 1 mm and smaller than or equal to 6 mm. Through the limitation of the width w1 of the cutting slot 1230, the tape 1100 can penetrate the extending portion 1220 conveniently and avoid the possibility that the tape 1100 is loosed from the extending portion 1220. In other embodiments, the number of the cutting slot can be plural, but the present disclosure is not limited thereto. The top portion 1210 has a bevel structure 1211 and a supporting portion 1212. The supporting portion 1212 is integrally connected to the bevel structure 1211 and the extending portion 1220. A radial width of the bevel structure 1211 is reduced from the extending portion 1220. From the view of Fig. 4A, the shape of the top portion 1210 is rectangular, and the shape of the bevel structure 1211 is substantially a trapezoid. An angle θ is contained between the bevel structure 1211 and the axis I1. The angle θ is 45 degrees, but the present disclosure does not limit the above-mentioned angle. The bevel structure 1211 can be a chamfer of the cover 1200 to prevent the user from being bruised accidentally while holding the handlebar 100. In other embodiments, the top portion can have a rounded corner structure to further prevent the possibility that the user is bruised accidentally while holding the handlebar, but the present disclosure is not limited thereto.

As shown in Fig. 4B, a radial width d1 of the extending portion 1220 is smaller than a radial width d2 of the supporting portion 1212. Furthermore, an outer edge of the top portion 1210 (an outer edge of the supporting portion 1212) and an outer edge of the extending portion 1220 are not equally spaced, and a maximum gap distance d3 is contained between the outer edge of the top portion 1210 and the outer edge of the extending portion 1220. The maximum gap distance d3 can be larger than or equal to 0.5 mm and smaller than or equal to 2 mm. Through the configuration of maximum gap distance d3, when the tape 1100 is wound around the extending portion 1220, a thickness of the tape 1100 winding the extending portion 1220 will not significantly exceed the outer edge of the top portion 1210. An overall appearance of the tape 1100 and the cover 1200 are coherent, and the portion that the tape 1100 winding the extending portion 1220 will not be a convex shape so as to enhance the aesthetic of the handlebar tape assembly 1000.

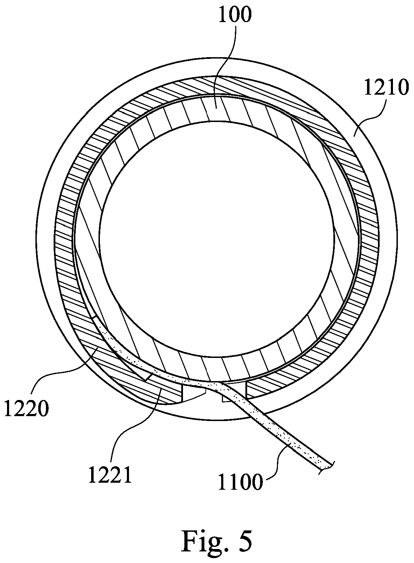

Please refer to Fig. 5. Fig. 5 is a cross-section view of the tape 1100 winding the extending portion 1220 from the cutting slot 1230 according to the embodiment of Fig. 1. As shown in Fig. 3, Fig. 4B and Fig. 5, the extending portion 1220 can include a radially protruded structure 1221, and the radially protruded structure 1221 is near the cutting slot 1230. The end of the tape 1100 penetrates from the cutting slot 1230 and is sandwiched between the radially protruded structure 1221 and the handlebar 100. Through the configuration of the radially protruded structure 1221, a gap between the handlebar 100 and an inner surface of the extending portion 1220 can be smaller than an initial thickness of the tape 1100. When the cover 1200 is sleeved on the terminal end 110, the tape 1100 attached to the inner surface of the extending portion 1220 is squeezed by the radially protruded structure 1221 and the handlebar 100, and the tape 1100 is tightly sandwiched between the radially protruded structure 1221 and the handlebar 100, thereby enhancing the strength of the tape 1100 securing the cover 1200 to the handlebar 100.

The radially protruded structure 1221 can include a chamfer portion 1222, and a thickness of the chamfer portion 1222 is reduced toward the cutting slot 1230. Furthermore, the inner surface of the extending portion 1220 can include a first curved surface 1223 and a second curved surface 1224. The first curved surface 1223 and the second curved surface 1224 are connected to each other along a circumferential direction. The second curved surface 1224 is near the radially protruded structure 1221, and a center of circle of the first curved surface 1223 and a center of circle of the second curved surface 1224 are different. The first curved surface 1223 and the second curved surface 1224 have a first inner radius R1 and a second inner radius R2 respectively. The first inner radius R1 is smaller than the second inner radius R2. Taking the center of circle of the first curved surface 1223 as the center, the inner surface of the extending portion 1220 can be divided into four arc surfaces by the two radial axes X1 and Y1 passing through the center of circle of the first curved surface 1223. The first curved surface 1223 is formed by three connected arc surfaces, and the second curved surface 1224 is the other arc surface. To be specific, the first inner radius R1 can be equal to or slightly larger than an outer radius of the handlebar 100 so as to allow the first curved surface 1223 to fit an outer wall of the handlebar 100. Besides, because the second inner radius R2 is larger than the outer radius of the handlebar 100, a gap is formed between the second curved surface 1224 and the outer wall of the handlebar 100 so as to accommodate the tape 1100. Furthermore, the second curved surface 1224 and the radially protruded structure 1221 can form a groove so as to allow the end of the tape 1100 to be snapped into the groove, thereby enhancing the strength of the tape 1100 securing the cover 1200 to the handlebar 100.

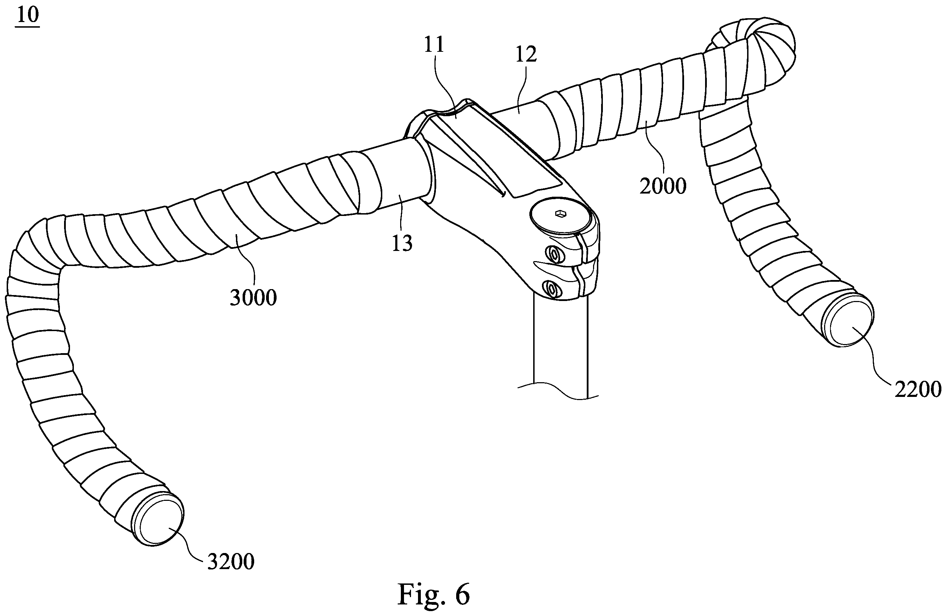

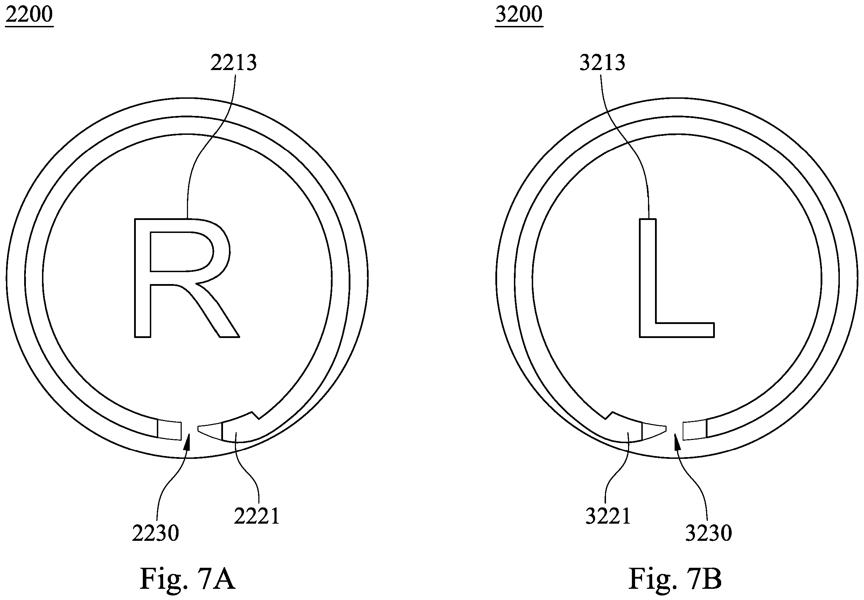

Please refer to Fig. 6, Fig. 7A and Fig. 7B. Fig. 6 is a partial three-dimensional schematic view of a bicycle 10 according to another embodiment of the present disclosure. Fig. 7A is a top view of a cover 2200 according to the embodiment of Fig. 6. Fig. 7B is a top view of another cover 3200 according to the embodiment of Fig. 6. As shown in Fig. 6, Fig. 7A and Fig. 7B, the bicycle 10 includes a frame 11, two wheels (not shown) and two handlebar tape assemblies 2000, 3000. The wheels are connected to the frame 11. The frame 11 includes a handle (not labelled), and the handle includes two handlebars 12, 13 which are located at the handle's left side and the handle's right side respectively. The handle is connected to a stem, and the stem is connected to a head tube. The structure and configuration of the handlebar tape assemblies 2000, 3000 are similar to the structure and configuration of the handlebar tape assembly 1000 according to the embodiment of Fig. 1, and the details will not be further described here. Particularly, a radially protruded structure 2221 of the cover 2200 of the handlebar tape assembly 2000 and a radially protruded structure 3221 of the cover 3200 of the handlebar tape assembly 3000 are located at different sides of the corresponding cutting slots 2230, 3230.

As shown in Fig. 7A and Fig. 7B, viewing from the same perspective, the radially protruded structure 2221 is near the right side of the cutting slot 2230, and the radially protruded structure 3221 is near the left side of the cutting slot 3230. When a tape penetrates from the cutting slot 2230, an end of the tape extends toward the right side of the cutting slot 2230 so as to be sandwiched between a handlebar and the radially protruded structure 2221; when another tape penetrates from the cutting slot 3230, an end of the tape extends toward the left side of the cutting slot 3230 so as to be sandwiched between another handlebar and the radially protruded structure 3221. In other words, the radially protruded structure in the present disclosure can be disposed at the left side of the cutting slot or right side of the cutting slot according to that the cover is installed at the left handlebar or the right handlebar.

In the conventional manner, the winding direction of the handlebar tape assembly may be different depending on the left handlebar or the right handlebar, the user needs to memorize different winding manners of the tape by his/her own. If the tape is wound around the right handlebar with the same winding manner of the left handlebar, the force for holding the right handlebar exerted by the right hand may be affected. As shown in Fig. 7A and Fig. 7B, the user can locate the tape according to the positions of the radially protruded structures 2221, 3221 in the cutting slots 2230, 3230 respectively, and the tape is wound around the handlebars 12, 13 along the direction that the chamfer portion of the radially protruded structures 2221, 3221 indicated. Taking the right handlebar 12 for example, the user can wind the tape around the handlebar 12 in the clockwise direction indicated by the chamfer portion of the radially protruded structure 2221, and the winding direction of the tape winding around the left handlebar 13 is opposite. In this way, the user can be guided in the direction of winding without having to memorize the winding manner of the tape in the conventional manner, thereby improving the convenience of the user in winding the tape.

Furthermore, the top portion of the covers 2200, 3200 can include labeling marks 2213, 3213. The labeling marks 2213, 3213 are disposed inside installing spaces. As shown in Fig. 7A and Fig. 7B, the labeling marks 2213, 3213 are the character marks of R and L respectively so as to allow the user to identify the covers 2200, 3200 corresponding to the handlebars 12, 13 on the right side and the left side. Therefore, the smoothness of installation can be enhanced.

In summary, the present disclosure provides a handlebar tape assembly and a bicycle having the following advantages: first, by sandwiching the tape between the handlebar and the terminal end, the usage stability and the installation convenience can be enhanced; second, through the configuration of the radially protruded structure, the tape can be further sandwiched between the extending portion and the handlebar; and third, through the configuration of the first curved surface and the second curved surface, the handlebar can be attached to the first curved surface, and the space inside the extending portion to accommodate the tape can be reserved so as to enhance the strength of the tape to secure the cover to the handlebar.

## Claims

1. A handlebar tape assembly (1000, 2000, 3000), applied to be disposed at a bicycle (10), the bicycle (10) comprising a handlebar (12, 13, 100) and a terminal end (110) of the handlebar (12, 13, 100) comprising an opening (120), the handlebar tape assembly (1000, 2000, 3000) being **characterized in** comprising:
a cover (1200, 2200, 3200) detachably sleeved on the terminal end (110) and comprising:
a top portion (1210) covering the opening (120);
an extending portion (1220) surrounding the top portion (1210) and extending from the top portion (1210) along an axis (11) of the cover (1200, 2200, 3200), the extending portion (1220) and the top portion (1210) forming an installing space, wherein the installing space is configured for accommodating the terminal end (110); and
at least one cutting slot (1230, 2230, 3230) disposed at the extending portion (1220) and extending from a distal end of the extending portion (1220) toward the top portion (1210); and
a tape (1100), an end of the tape (1100) penetrating through the extending portion (1220) from the at least one cutting slot (1230, 2230, 3230) and sandwiched between the extending portion (1220) and the terminal end (110), wherein the tape (1100) is wound around an outer side of the extending portion (1220) and the handlebar (12, 13, 100) about the axis (I1).

2. The handlebar tape assembly (1000, 2000, 3000) of claim 1, wherein the extending portion (1220) comprises:
a radially protruded structure (1221, 2221, 3221) near the at least one cutting slot (1230, 2230, 3230), wherein the end of the tape (1100) penetrates therethrough from the at least one cutting slot (1230, 2230, 3230) and is sandwiched between the radially protruded structure (1221, 2221, 3221) and the handlebar (12, 13, 100).

3. The handlebar tape assembly (1000, 2000, 3000) of any of claims 1 to 2, wherein the radially protruded structure (1221, 2221, 3221) comprises a chamfer portion (1222), and a thickness of the chamfer portion (1222) is reduced toward the at least one cutting slot (1230, 2230, 3230).

4. The handlebar tape assembly (1000, 2000, 3000) of any of claims 1 to 3, wherein an inner surface of the extending portion (1220) comprises a first curved surface (1223) and a second curved surface (1224), the first curved surface (1223) and the second curved surface (1224) are connected to each other along a circumferential direction, the second curved surface (1224) is near the radially protruded structure (1221, 2221, 3221), and a center of circle of the first curved surface (1223) and a center of circle of the second curved surface (1224) are different.

5. The handlebar tape assembly (1000, 2000, 3000) of any of claims 1 to 4, wherein the first curved surface (1223) and the second curved surface (1224) comprise a first inner radius (R1) and a second inner radius (R2) respectively, and the first inner radius (R1) is smaller than the second inner radius (R2).

6. The handlebar tape assembly (1000, 2000, 3000) of any of claims 1 to 5, wherein a maximum gap distance (d3) is contained between an outer edge of the top portion (1210) and an outer edge of the extending portion (1220), and the maximum gap distance (d3) is larger than or equal to 0.5 mm and smaller than or equal to 2 mm.

7. The handlebar tape assembly (1000, 2000, 3000) of any of claims 1 to 6, wherein a number of the at least one cutting slot (1230, 2230, 3230) is one.

8. The handlebar tape assembly (1000, 2000, 3000) of any of claims 1 to 7, wherein a width (w1) of the at least one cutting slot (1230, 2230, 3230) is larger than or equal to 1 mm and smaller than or equal to 6 mm.

9. The handlebar tape assembly (1000, 2000, 3000) of any of claims 1 to 8, wherein the top portion (1210) comprises a bevel structure (1211), and a radial width of the bevel structure (1211) is reduced from the extending portion (1220).
